# EUROPEAN PATENT APPLICATION

(11) **EP 2 141 638 A2**
(43) Date of publication of application: **06.01.2010**
(21) Application number: 09163583.9
(22) Date of filing: 24.06.2009
(51) Int. Cl.: G06K 19/077

(54) **RFID tag and method of vehicle attachment thereof**

(30) Priority: 30.06.2008 US 164172
(71) Applicant: The Goodyear Tire & Rubber Company, Akron, OH 44316-0001 (US)
(72) Inventor: Benedict, Robert Leon, Tallmadge, OH 44278 (US); Incavo, Joseph Alan, Hudson, OH 44236 (US); Fenkanyn, John Michael, Akron, OH 44312 (US); Orosa, Mario Vincent, North Canton, OH 44720 (US)
(74) Representative: Kutsch, Bernd

(57) **Abstract**

An electronic tag (10, 46) for a vehicle (42) includes an antenna (12); a data transmitter (14) coupled to the antenna (12); and an elastomeric coating layer (24) encapsulating the data transmitter and antenna. The tag may attach to the vehicle by means of a tire (34) or otherwise affixed to the body of the vehicle. The antenna may be configured as a dipole accessible by an external signal from substantially a 360 degree sphere surrounding the tag package. An adhesive material layer (32) may be included to encapsulate the elastomeric material coated data transmitter and antenna and utilized to attach the tag to a vehicle component.

## Description

### Field of the Invention

The invention relates generally to RFID tags for vehicle tagging and, more specifically, to packaging configurations for such tags.

### Background of the Invention

Currently, vehicle tags are available which are weatherproof but which require mounting holes to be drilled on the vehicle. Such modification to the vehicle is undesirable. In addition, commercially available vehicle tags require a separate or an integral metal back plate to operate efficiently. A back plate, however, limits the ability to read/write to the tag from the side where the metal back plate exists. This limitation decreases the utility of the RFID tag and its range of intended applications.

### Summary of the Invention

The invention relates to an electronic tag according to claim 1, a tire according to claim 6, a vehicle according to claim 9 and a method according to claim 11.

Dependent claims refer to preferred embodiments of the invention.

According to an aspect of the invention, an electronic tag for a vehicle includes
an antenna; a data transmitter coupled to the antenna; and an elastomeric coating layer encapsulating the transmitter and antenna. The tag may attach to the vehicle by means of a tire or otherwise affixed to the body of the vehicle.

In another aspect, the antenna is configured as a dipole accessible by an external signal from substantially a 360 degree sphere surrounding the tag package. An adhesive material layer may be included to encapsulate the elastomeric material coated transmitter and antenna.

Pursuant to a further aspect of the invention, a method for tagging a vehicle with an electronic tag is provided and includes: coupling a data transmitter to an antenna configured as a dipole accessible to an externally originating signal from substantially a 360 degree sphere surrounding the tag; encapsulating the transmitter and antenna within an elastomeric coating layer; and affixing the encapsulated transmitter and antenna to a vehicle. The method may further include attaching the encapsulated transmitter and antenna to a tire of the vehicle.

The method in another aspect may include encapsulating the elastomeric layer coated transmitter and antenna within an outer adhesive material layer; and utilizing the outer adhesive material layer to attach the transmitter and antenna to a vehicle component such as, but not limited to, a non-metallic surface of the vehicle.

### Definitions

"Innerliner" means the layer or layers of elastomer or other material that form the inside surface of a tubeless tire and that contain the inflating fluid within the tire.

### Brief Description of the Drawings

The invention will be described by way of example and with reference to the accompanying drawings in which:
FIG. 1 is a RFID dipole configured tag pursuant to the invention prior to coating;
FIG. 2 is a tag package alternative to that shown in FIG. 1 showing a two piece gum strip and tag construction.
FIG. 3 is a depiction of the RFID tag of FIG. 1 being covered by a liquid rubber spray application;
FIG. 3A is a view illustrating the application of a rubber compound to the tag by means of a dipping procedure;
FIG. 4 is a longitudinal side sectional view of a rubber coated RFID tag;
FIG. 5 is a schematic view of the RFID tag affixed to a surface by means of epoxy resin application;
FIG. 6 is a schematic view of an epoxy coat applied to fully enclose a tag;
FIG. 7 is a schematic view of a tag affixed to an inner surface of a tire pursuant to the invention.
FIG. 8 is a schematic view of a tag incorporated into the construction of a tire pursuant to the invention.
FIG. 9 is a schematic view of a prior art method of attachment of a tag to a vehicle.
FIG. 10 is a schematic view of the attachment of an RFID tag to a vehicle pursuant to the invention.
FIG. 11 is a schematic representation of the tag transmission directional pattern of a tag attached pursuant to FIG. 9.
FIG. 12 is a schematic representation of the tag transmission directional pattern of a tag attached pursuant to FIG. 10.

### Detailed Description of the Invention

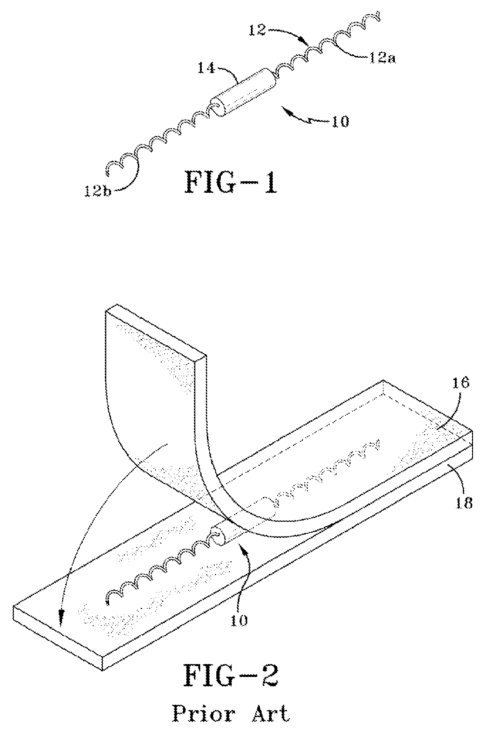

Referring initially to FIGS. 1 and 2, the subject invention relates to a tag 10 for vehicle tagging. The tag 10 is an RFID device for conveying vehicle related data from the vehicle to a remote receiver (not shown). Such information may include vehicle identification data, data correlating vehicle components such as tires with the vehicle, ownership information, etc. The data so conveyed may be used to determine and track the location of the vehicle. The capability of tracking a vehicle is particularly useful in commercial fleet applications where the vehicle is a truck or a bus. The receiver(s) located to receive data transmissions my convey such data to a central computer for storage and/or processing. The tag 10 may be a read-only device or may also include a write capability for receiving and storing data transmitted from a remote transmitter.

The tag, or transponder, 10 is intended to be mounted to either a tire on the vehicle or to a vehicle surface. The mounting method as will be explained is weatherproof, easily installed, and provides read/write access covering the majority of a 360 degree sphere provided the tag 10 is mounted to a non-metallic surface. The tag 10 mounts in such a manner that does not require modifications to the vehicle which is of significant importance because some vehicles may be leased and permanent modifications to the vehicle contractually proscribed.

The tag 10 is configured having a dipole antenna 12 have waving antenna segments 12A and 12B electrically and mechanically connected to the tag electronics 14. As shown in FIG. 2, representing a prior art packaging approach, the tag 10 may be sandwiched between two gum strips 16, 18 that protect the tag yet do not interfere electrically with the operation of the tag.

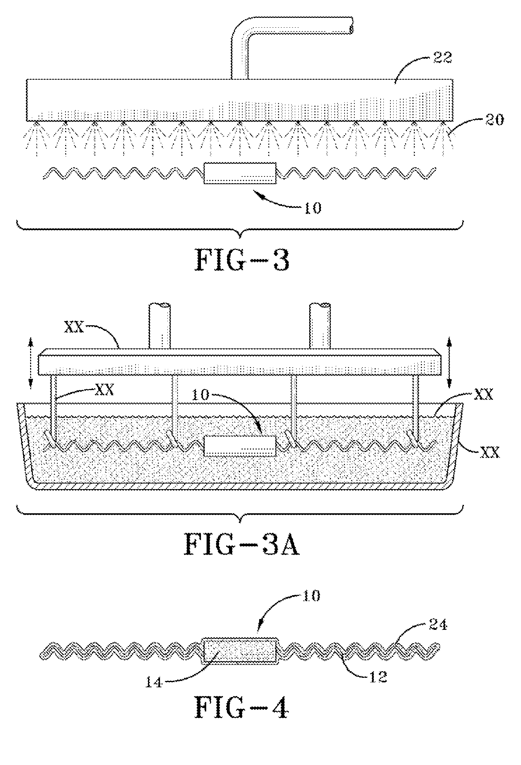

The present invention contemplates a method and construction of a tag package to include the application of liquid rubber compound 20 to the tag 10 as will be appreciated from FIGS. 4, 5, 6, and 7. The application of the liquid rubber compound 20 may be means of an applicator apparatus 22 or achieved by means of a dipping procedure. A rubber coating layer 24 results which encapsulates the entirety of the tag 10 is shown in FIG. 4. The relatively thin layer 24 preferably having a thickness in a range of from 0.1 to 1 mm closely adheres to the antenna segments 12A and 12B as well as the electronics module 14 and serves to protect the structural integrity of the tag 10 and the connections between the antenna 12 and electronics module 14.

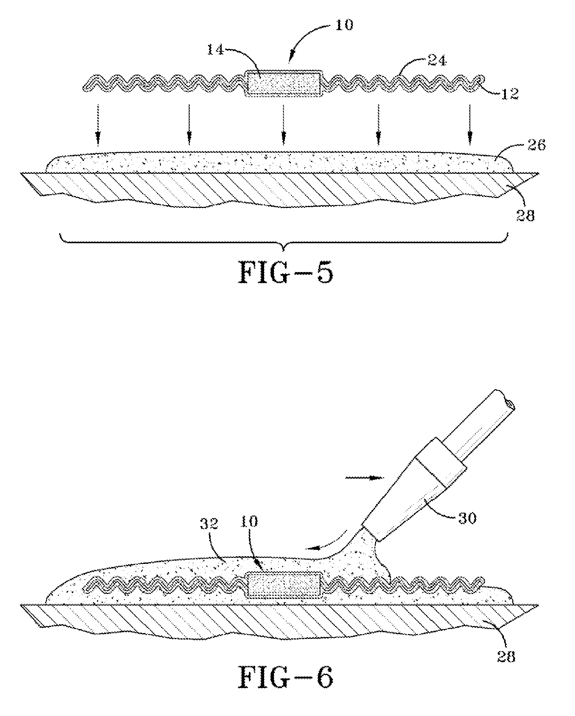

As depicted in FIGS. 5 and 6, the tag 10 including the rubber outer layer 24 may be attached to a surface 28 by the placement of a base strip of adhesive material 26 such as epoxy to the surface 28. The tag 10 is thereafter embedded into the base strip 26. Thereafter, an encapsulating strip 32 of adhesive material is applied across the embedded tag 10 by means of an applicator nozzle 30. The tag 10 is thus encapsulated in its entirety by the adhesive material 32 including base strip 26. The tag 10 adheres to the surface 28 free of electrical interference from the rubber coating layer 24 and the epoxy adhesive layer 32.

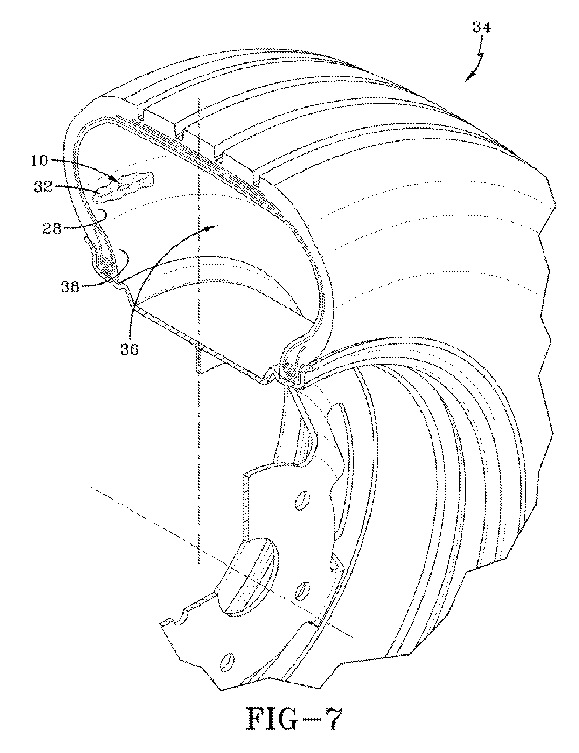

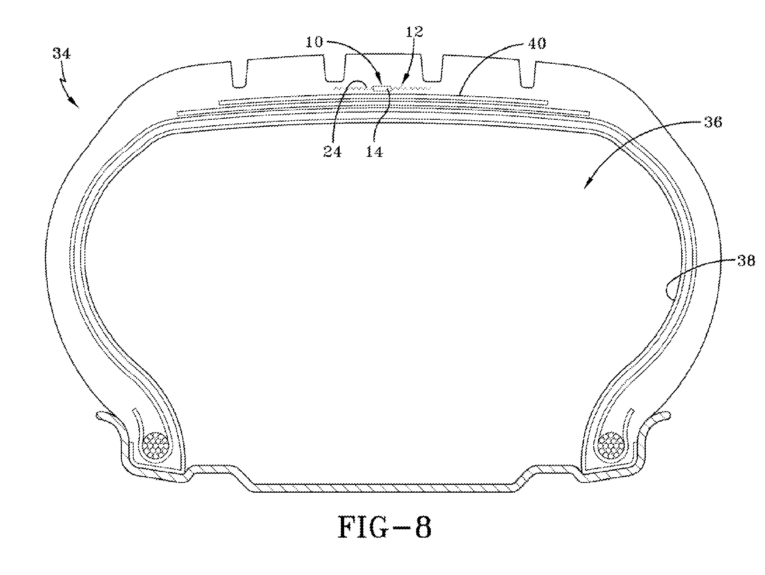

It is preferable that the surface 28 be a non-metallic surface of the vehicle so as not to interfere with operation of the tag 10. One possible mounting location is to a tire 34 of the vehicle as schematically shown by FIG. 7. The tag 10 may be affixed by the epoxy adhesive layer 32 to an inner liner 38 of the tire surrounding a tire inner cavity 36. So positioned, the tag 10 may transmit data from the tire location to a remote receiver. FIG. 8 shows an alternative means for attaching the tag 10 to a tire 34. In the FIG. 8 approach, the tag 10 is incorporated into the rubber material of the tire tread 40 during tire manufacture. The rubber coating 24 surrounding the tag 10 may be compounded to be compatible with such a placement into the tire rubber. Positioned within the tread 40, the tag 10 is located to facilitate data transmission from the tire to an external reader.

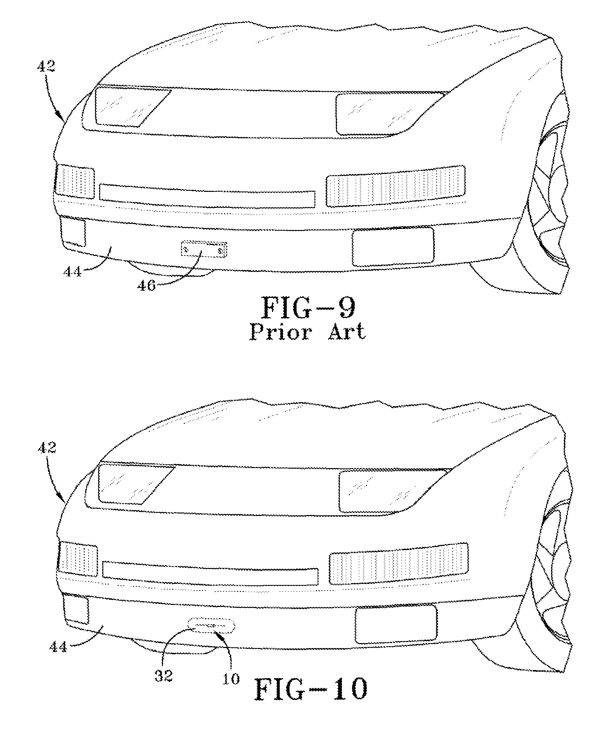

The tag 10 may alternatively be attached to a body surface of a car 42, such as but not limited to a car bumper surface 44. FIG. 9 shows an attachment of a prior art tag 46 to a car bumper 44. The tag 46 is encased within a metallic housing that is mounted to the vehicle by mounting holes drilled through the mounting surface. The housing of the tag 46 may be weather resistant; however, the necessity for mounting holes through a vehicle surface is undesirable and may be prohibited in the case of a leased vehicle. In addition, the housing of conventionally configured tags 46 requires a metal backplate to operate efficiently. The backplate reflects a signal from the tag 46 outward in a pattern such as the pattern 48 represented by FIG. 11. The data transmission signal in the pattern 48 is forwardly directed, meaning that the vehicle must more or less face the remote receiver in order to ensure the veracity of a transmission. Furthermore, the metal backplate behind prior art configured tags 46 limits the ability to read/write to the tag 46 from the side where the metal backplate is located.

The present invention tag 10 overcomes the limitations of the prior art by providing a tag package and mounting method that does not require vehicle modification. The mounting procedure utilizes a caulking type adhesive to embed and mount the tag 10 on the vehicle. The tag 10 is configured having a dipole antenna that provides substantially 360 degree read/write capability when mounted on a non-metallic surface and provides increased read/write capability on a metallic backplate over the commercially available prior art vehicle tags. FIG. 10 shows a vehicle body based mounting location for the tag 10, on the bumper 44. As will be appreciated, mounting the tag 10 to the bumper 44 by the adhesive epoxy layer 32 is simpler, less expensive, and less invasive to the vehicle than the screw on attachment technique of the prior art. As shown in FIG. 12, the result of mounting the dipole antenna configured tag to a vehicle non-metallic surface is that the tag 10 provides substantially 360 degree read/write capability as shown by the spherical pattern 50. Placement of the receiver (not shown) relative to the vehicle is accordingly not as critical as prior art tags conventionally mounted and the veracity of transmitted data is improved through the practice of the invention.

From the forgoing, it will be understand that the invention provides an electronic tag configuration 10 for a vehicle that includes an antenna 12; a data transmitter 14 coupled to the antenna; and an elastomeric coating layer 24 encapsulating the transmitter and antenna. The tag 10 may attach to the vehicle by means of a tire 34 or otherwise affixed to a body surface 44 of the vehicle. The antenna is preferably configured as a dipole that facilitates data transmission to and from an external transponder from substantially a 360 degree sphere surrounding the tag package. An adhesive material layer 26 may be included to encapsulate the tag, including the elastomeric material coated transmitter 14 and antenna 12.

The invention further provides a method for tagging a vehicle with an electronic tag 10, and includes: coupling a data transmitter 14 to an antenna 12 configured as a dipole accessible to an externally originating signal from substantially a 360 degree sphere surrounding the tag 10; encapsulating the transmitter and antenna within an elastomeric coating layer 24; and affixing the encapsulated transmitter and antenna to a vehicle. Attachment of the encapsulated transmitter and antenna may be made to a tire of the vehicle or to the vehicle body. The method may include encapsulating the elastomeric layer coated transmitter and antenna within an outer adhesive material layer 32; and utilizing the outer adhesive material layer 32 to attach the transmitter and antenna to a vehicle component such as, but not limited to, a non-metallic surface of the vehicle.

## Claims

1. An electronic tag (10, 46) for a vehicle (42) comprising:
an antenna (12);
a data transmitter (14) coupled to the antenna (12);
an elastomeric coating layer (24) substantially encapsulating the transmitter (14) and antenna (12).

2. The tag of claim 1, wherein the antenna (12) is configured as a dipole accessible by an external signal from substantially a 360 degree sphere surrounding the tag (10, 46).

3. The tag of claim 1 or 2, wherein further comprising an adhesive material layer (32) substantially encapsulating the elastomeric coating layer (24).

4. The tag of claim 3, wherein the adhesive material layer (32) is at least partially composed of an epoxy material.

5. The tag of at least one of the previous claims, wherein the elastomeric coating layer (24) is at least partially composed of a rubber material.

6. A tire comprising an electronic tag (10, 46) according to one of the previous claims.

7. The tire of claim 6 wherein the tag (10, 46) is attached to an inner liner (38) of the tire (34).

8. The tire of claim 6 wherein the tag is incorporated into the rubber material of the tread (40) of the tire (34).

9. A vehicle comprising an electronic tag (10, 46) according to one of the claims 1 to 5.

10. The vehicle according to claim 5 wherein the tag (10, 46) is attached to a preferably non-metallic body surface (44) of the car (42).

11. A method for tagging a vehicle with an electronic tag (10, 46), the method comprising:
coupling a data transmitter (14) to an antenna (12) configured as a dipole and accessible to an externally originating signal from substantially a 360 degree sphere;
at least substantially encapsulating the data transmitter (14) and the antenna (12) within an elastomeric coating layer (24);
affixing the encapsulated data transmitter (14) and antenna (12) to a vehicle (42).

12. The method of claim 10, further comprising attaching the encapsulated data transmitter (14) and antenna (12) to a tire (34) of the vehicle (42).

13. The method of claim 11 or 12, further comprising substantially encapsulating the elastomeric layer coated data transmitter (14) and antenna (12) within an outer adhesive material layer (32); and utilizing the outer adhesive material layer (32) to attach the data transmitter (12) and antenna (14) to the vehicle (42).

14. The method of claim 13, further comprising attaching the data transmitter (12) and antenna (14) to a non-metallic surface (44) of the vehicle (42).
